(19) Europäisches Patentamt
European Patent Office
Office européen des brevets

(11) **EP 3 985 567 A1**

(12) **EUROPEAN PATENT APPLICATION**

(43) Date of publication:
**20.04.2022 Bulletin 2022/16**

(21) Application number: **20202611.8**

(22) Date of filing: **19.10.2020**

(51) International Patent Classification (IPC):
**G06N 3/04** *(2006.01)*    **G06N 3/08** *(2006.01)*
**G06F 21/75** *(2013.01)*    **H04L 9/00** *(2022.01)*

(52) Cooperative Patent Classification (CPC):
**G06N 3/0454; G06F 21/755; G06N 3/0472;
G06N 3/084; H04L 9/003**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventor: **Hettwer, Benjamin
70180 Stuttgart (DE)**

(54) **METHOD AND APPARATUS FOR A NEURAL NETWORK**

(57)    Method, for example computer-implemented method, for a neural network, for example an artificial deep neural network, comprising: providing a plurality of training data sets, each training data set comprising input data for the neural network and associated output data, training the neural network based on the plurality of training data sets and a loss function, wherein the loss function is based on a correlation of an output value provided by the neural network and a predetermined function characterizing an operation of a physical system, wherein the method further comprises weighting bit values Ibit of a leakage value associated with the predetermined function using weighting coefficients, wherein weighted bit values Ibit_w are obtained, and evaluating the correlation based on the weighted bit values Ibit_w.

Fig. 6

**Description**

Background

The disclosure relates to a method for a neural network.
The disclosure further relates to an apparatus for a neural network.

Summary

Exemplary embodiments relate to a method, for example computer-implemented method, for a neural network, for example an artificial deep neural network, comprising: providing a plurality of training data sets, each training data set comprising input data for the neural network and associated output data, training the neural network based on the plurality of training data sets and a loss function, wherein the loss function is based on a correlation of an output value provided by the neural network and a predetermined function characterizing an operation of a physical system, wherein the method further comprises weighting bit values of a leakage value associated with the predetermined function using weighting coefficients, wherein weighted bit values are obtained, and evaluating the correlation based on the weighted bit values. In some embodiments, this enables to increase a correlation coefficient within a side channel attack (SCA).
In some embodiments, a weighted sum may be obtained based on the weighted bit values.
In some embodiments, the correlation of an output value provided by the neural network and a predetermined function characterizing an operation of a physical system is determined or evaluated in a non-bit-wise manner, e.g. considereing "complete" numbers, e.g. float variables.
In some embodiments, the correlation of an output value provided by the neural network and a predetermined function characterizing an operation of a physical system is determined or evaluated in a bit-wise manner, e.g. considereing individual bits for the evaluation.
According to further exemplary embodiments, the method further comprises using a further neural network, e.g. a perceptron, to approximate at least some of the weighting coefficients.
In some embodiments, the further neural network may also be used to determine a weighted sum based on the weighted bit values.
According to further exemplary embodiments, the providing of the training data sets comprises: determining a plurality of profiling traces, wherein each profiling trace characterizes at least one physical parameter, for example an electrical power consumption, of the physical system during execution of the predetermined function, and determining a respective output value of the predetermined function for each of the plurality of profiling traces, and, optionally, using the profiling traces and the output values as said training data sets.
In some embodiments, a profiling trace can e.g. be characterized by a plurality of measurements of an electrical power consumption of the physical system, e.g. a time series of such measurements, which may e.g. be represented by a vector.
In some embodiments, a respective output value may be obtained from evaluating the predetermined function, which may e.g. comprise a cryptographic primitive and/or function, such as e.g. the S-Box (nonlinear substitution) operation according to the Advanced Encryption Standard (AES). As an example, in some embodiments, input data such as e.g. a plaintext p and a (secret) key k may be used, and the function f(p, k), e.g. the S-Box operation, may be evaluated based on the input data p, k, to obtain the respective output value v=f(p, k).
Note that in some embodiments, e.g. for a profiling phase, e.g. for training the DNN, the usually secret key k is known and may be used to determine the output value v. In some embodiments, in a further phase, e.g. after the DNN has been trained (profiling phase), the trained DNN may be used to analyze and/or "attack" (e.g., perform side channel analysis) the physical system and/or a similar system, e.g. to determine a secret key used by the physical system. In some embodiments, e.g. during the further (e.g., "attack") phase, the information represented by the trained DNN may be used to determine the (then) secret key.
According to further exemplary embodiments, the neural network is a convolutional neural network, e.g. a neural network providing convolution operations to process data provided to the DNN as input data and/or data derived from the input data.
According to further exemplary embodiments, a backpropagation technique is used for the training.
According to further exemplary embodiments, the loss function can be characterized by the following equation:

$$\mathcal{L}_{CO-BIT}(l_{bit}, \theta_{bit}) = \sum_{i=1}^{B} |\mathcal{L}_{CO}(l_{bit}, \theta_{bit})^{(i)}|$$

,

wherein $l_{bit}$ characterizes a bit value of a leakage value associated with the predetermined function, wherein $\theta_{bit}$ characterizes a bit value of the output value, wherein i is an index variable, wherein B is a total number of bits, e.g. of the function value, wherein $\mathcal{L}_{CO}$ characterizes a correlation loss function, and wherein |.| characterizes an absolute value.

According to further exemplary embodiments, the correlation loss function can be characterized by the following equation:

$$\mathcal{L}_{CO}(l, \theta) = 1 - \frac{cov(l, \theta)}{\sigma_l \sigma_\theta + \epsilon} =$$
$$1 - \frac{\sum_{i=1}^{D}[(l_i - \bar{l})(\theta_i - \bar{\theta})]}{\sqrt{\sum_{i=1}^{D}(l_i - \bar{l})^2 \sum_{i=1}^{D}(\theta_i - \bar{\theta})^2} + \epsilon},$$

wherein cov() is a covariance, wherein $\sigma_l$ characterizes the standard deviation of the input vector I,

wherein $\sigma_\theta$ characterizes the standard deviation of the input vector $\theta$, wherein D characterizes the batch size (e.g., characterizing a number of e.g. power traces considered), wherein $\bar{l}$ characterizes the mean of the input I, wherein $\bar{\theta}$ characterizes the mean of the input $\theta$, wherein $\epsilon$ characterizes a characterizes a non-vanishing, e.g. small, parameter, wherein for example $\epsilon = 10^{-14}$. In some embodiments, the parameter $\epsilon$ may be used to avoid division by zero in some cases.

According to further exemplary embodiments, the method further comprises weighting the bit values $l_{bit}$ of the leakage value using weighting coefficients, wherein weighted bit values $l_{bit\_w}$ are obtained, and performing the correlation based on the weighted bit values $l_{bit\_w}$ ("weighted bit leakage").

In some embodiments, a bit-wise correlation may be performed based on the weighted bit values $l_{bit\_w}$.

In some embodiments, a non-bit-wise correlation may be performed based on the weighted bit values $l_{bit\_w}$. In other words, in some embodiments, the weighting of the bit values $l_{bit}$ of the leakage value using weighting coefficients may be performed, and a non-bit-wise correlation may be performed based on a result thereof.

According to further exemplary embodiments, using a further neural network, e.g. a perceptron, is proposed, to approximate at least some of the weighting coefficients. In some embodiments, the weighting coefficients comprise information on hardware aspects such as e.g. parasitic capacitance and/or (transmission) line/wire lengths, e.g. between different register cells of the physical system, which may influence e.g. the electric power consumption.

According to further exemplary embodiments, the weighted bit leakage may be characterized by the equation

$$l_{w-bit} = \eta + \sum_{i=1}^{B} c_i \times (RQ \oplus RD) = \eta + \sum_{i=1}^{B} c_i \times l_{bit}^{(i)},$$

wherein it is assumed that R is a B-bit register with an input RD and a registered output RQ, and wherein $\eta$ refers to a non-data dependent noise factor.

According to further exemplary embodiments, the method further comprises modifying a design and/or structure of the physical system based on at least one of the approximated weighting coefficients. In some embodiments, this way, asymmetry between different bit lines of the physical system may be reduced, wherein the physical system may be hardened against side-channel attacks.

According to further exemplary embodiments, the method further comprises using the neural network for determining information on at least one unknown and/or secret parameter of the physical system and/or of a further physical system, which for example is structurally identical with the physical system at least to some extent. In some embodiments, the DNN trained according to the principle of the embodiments may e.g. be used for SCA, e.g. based on correlation power analysis (CPA).

Further exemplary embodiments relate to an apparatus configured to perform the method according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the computer program according to the embodiments for at least one of: a) performing a side channel analysis and/or attack on a physical system, b) evaluating a design of a physical system, e.g. regarding its vulnerability to side channel attacks, c) determining a correlation between a predicted output of a physical system and a physical parameter, e.g. power consumption, of the physical system, d) determining secret data, e.g. a secret cryptographic key.

Brief description of the figures

Some exemplary embodiments will now be described with reference to the accompanying drawings, in which:

Fig. 1A    schematically depicts a simplified flow-chart of a method according to exemplary embodiments,

Fig. 1B    schematically depicts a simplified flow-chart of a method according to further exemplary embodiments,

Fig. 2    schematically depicts a simplified block diagram according to further exemplary embodiments,

Fig. 3    schematically depicts a simplified block diagram according to further exemplary embodiments,

Fig. 4    schematically depicts a simplified flow-chart of a method according to further exemplary embodiments,

Fig. 5    schematically depicts a simplified flow-chart of a method according to further exemplary embodiments,

Fig. 6    schematically depicts a simplified flow-chart of a method according to further exemplary embodiments,

Fig. 7    schematically depicts a simplified flow-chart of a method according to further exemplary embodiments,

Fig. 8    schematically depicts a simplified block diagram according to further exemplary embodiments, and

Fig. 9    schematically depicts aspects of use according to further exemplary embodiments.

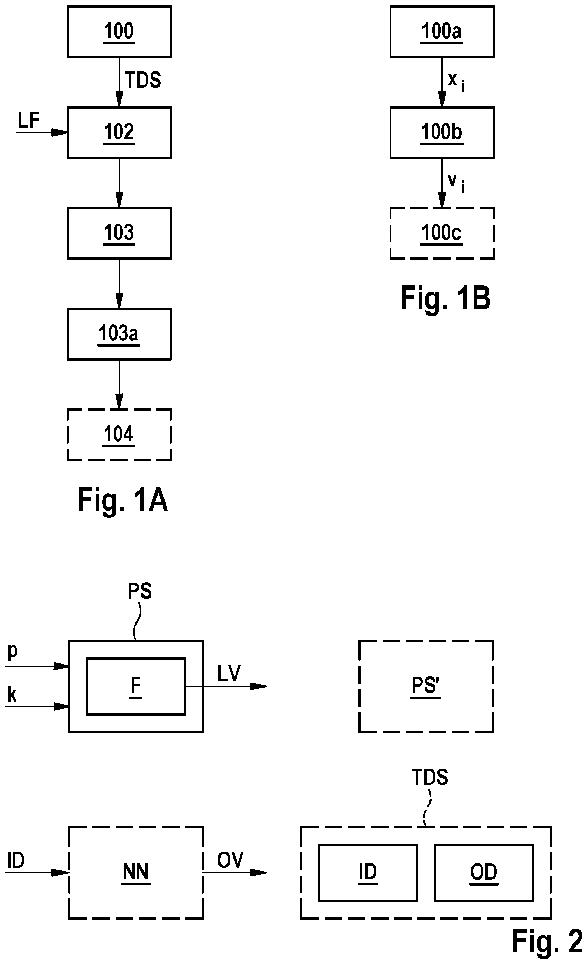

Exemplary embodiments relate to a method, Fig. 1A, 2, for example a computer-implemented method, for a neural network, for example an artificial deep neural network (DNN), comprising: providing 100 a plurality of training data sets TDS, each training data set comprising input data ID for the neural network NN and associated output data OD, training 102 the neural network NN based on the plurality of training data sets TDS and a loss function LF, wherein the loss function LF is based on a (e.g., non-bit-wise) correlation of an output value OV provided by the neural network and a predetermined function F characterizing an operation of a physical system PS, wherein the method further comprises weighting 103 bit values lbit of a leakage value LV associated with the predetermined function F using weighting coefficients $c_i$, wherein weighted bit values lbit_w are obtained, and evaluating 103a the correlation based on the weighted bit values lbit_w.

According to further exemplary embodiments, the providing 100 of the training data sets TDS comprises, Fig. 1B: determining 100a a plurality of profiling traces $x_i$, wherein each profiling trace $x_i$ characterizes at least one physical parameter, for example an electrical power consumption, of the physical system PS (Fig. 2) during execution of the predetermined function F, and determining 100b a respective output value $v_i$ of the predetermined function F for each of the plurality of profiling traces $x_i$, and, optionally, using 100c the profiling traces $x_i$ and the output values $v_i$ as said training data sets TDS.

In some embodiments, the training data sets TDS may be characterized by $D_{Train} = \{x_i, v_i\}$, with i = 1, .., $N_{Profiling}$, wherein $N_{Profiling}$ characterizes a number of the training data sets TDS.

In some embodiments, a profiling trace $x_i$ can e.g. be characterized by a plurality of measurements of an electrical power consumption of the physical system PS, e.g. a time series of such measurements, which may e.g. be represented by a vector $x_i$. In some embodiments, the physical system PS may be or comprise an electronic device, e.g. an electronic device configured to perform cryptographic functions.

In some embodiments, a respective output value $v_i$ may be obtained from evaluating the predetermined function F, which may e.g. comprise a cryptographic primitive and/or function, such as e.g. the S-Box (nonlinear substitution) operation according to the Advanced Encryption Standard (AES). As an example, in some embodiments, input data such as e.g. a plaintext p and a (secret) key k may be used, and the function f(p, k) (exemplarily symbolized by reference sign "F" in Fig. 2), e.g. the S-Box operation, may be evaluated based on the input data p, k, to obtain the respective output value v=f(p, k).

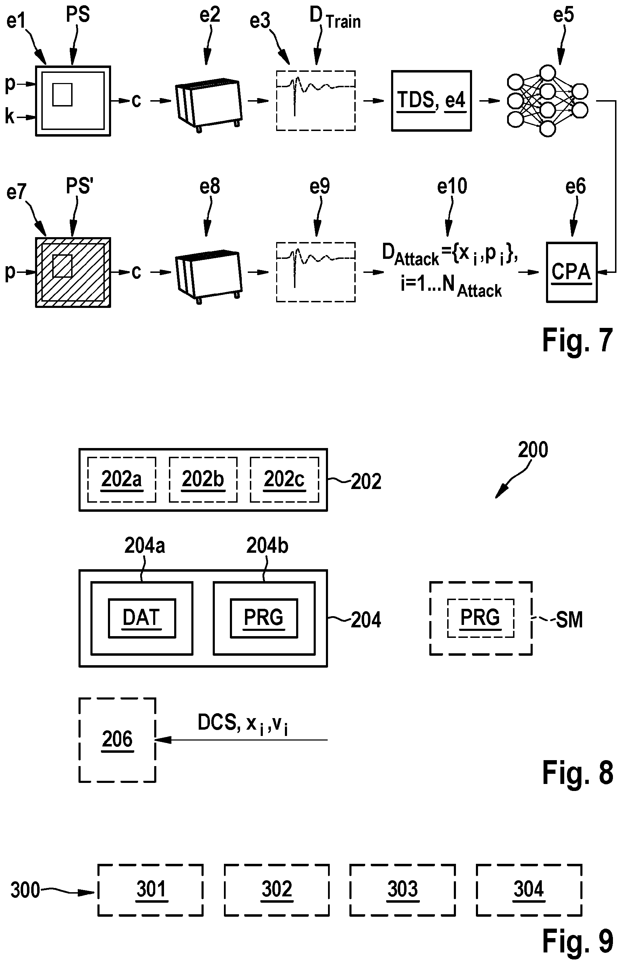

Note that in some embodiments, e.g. for a profiling phase, e.g. for training the DNN, the - usually secret - key k is known and may be used to determine the output value v. In some embodiments, in a further phase, e.g. after the DNN NN has been trained, e.g. during the profiling phase, the trained DNN may be used to analyze and/or "attack" (e.g., perform side channel analysis) the physical system PS and/or a similar system PS' (see Fig. 7), e.g. to determine a secret key used by the physical system PS'. In some embodiments, e.g. during the further (e.g., "attack") phase, the information represented by the trained DNN may be used to determine the (then) secret key.

According to further exemplary embodiments, the neural network NN (Fig. 2) is a convolutional neural network (CNN), e.g. a neural network providing convolution operations to process data provided to the DNN as input data and/or data derived from the input data. In some embodiments, the neural network NN may comprise a multi-layer perceptron (MLP).

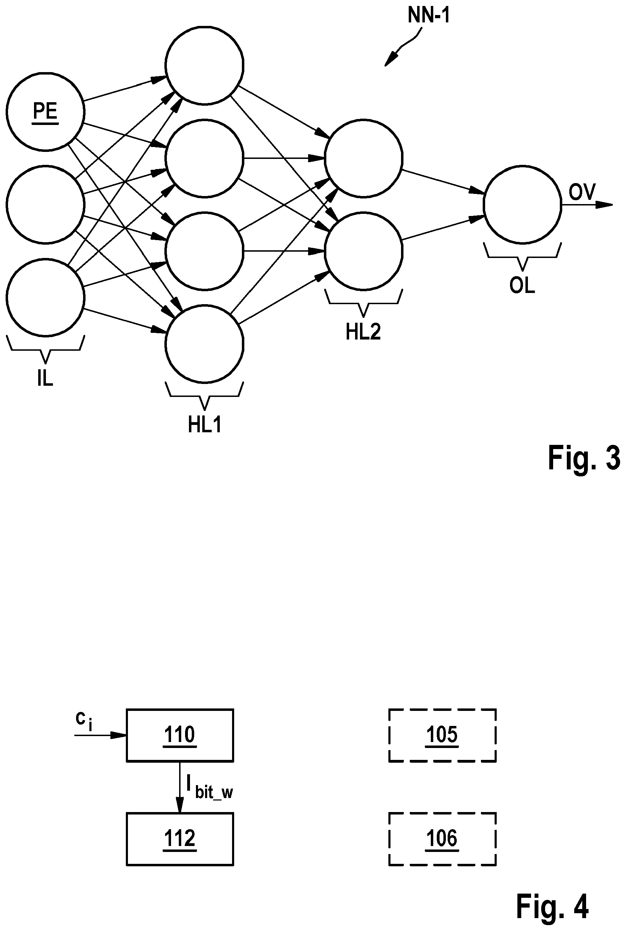

Fig. 3 exemplarily depicts a simplified block diagram of a possible network topology NN-1 for the DNN NN of Fig. 2. The DNN NN comprises an input layer IL with a first number of processing elements (only one of which is denoted with reference sign PE in Fig. 3 for the sake of clarity), an output layer OL (presently comprising a single processing element, and two intermediate or hidden layers HL1, HL2.

In some embodiments, a number of processing elements PE of the input layer IL may e.g. correspond with the number of power consumption measurement values of a profiling trace $x_i$, wherein e.g. each processing element PE of the input layer IL is configured to process one power consumption measurement value of the profiling trace $x_i$.

In some embodiments, the processing element of the output layer OL may be configured to output a floating point number as output value OV, e.g. characterizing an encoding. In other words, in some embodiments, the DNN NN may be used as an encode network that determines the output value OV based on the input data, e.g. power traces of the physical system PS.

In some embodiments, at least some of the layers IL, HL1, HL2, OL may be fully connected, as exemplarily depicted by Fig. 3. In some embodiments, other connection topologies may be provided.

According to further exemplary embodiments, a backpropagation technique is used for the training 102 (Fig. 1A).

According to further exemplary embodiments, the loss function e.g. used for backpropagation can be characterized by the following equation:

$$\mathcal{L}_{CO-BIT}(l_{bit}, \theta_{bit}) = \sum_{i=1}^{B} |\mathcal{L}_{CO}(l_{bit}, \theta_{bit})^{(i)}|$$

(equation 1),

wherein $l_{bit}$ characterizes a bit value of a leakage value associated with the predetermined function F (Fig. 2), wherein $\theta_{bit}$ characterizes a bit value of the output value OV, wherein i is an index variable, wherein B is a total number of bits, e.g. of the function value OV, wherein $\mathcal{L}_{CO}$ characterizes a correlation loss function, and wherein |.| characterizes an absolute value.

As can be seen, in some embodiments, the loss function is evaluated in a bit-wise manner, e.g. processing,

$$\sum_{i=1}^{B} |\mathcal{L}_{CO}(l_{bit}, \theta_{bit})^{(i)}|$$

by means of the sum , corresponding single bits of the output value OV (represented by $\theta$ in the above equation) and of the leakage value I (corresponding with the output value $v_i$ of the function F) each.

In other words, in some embodiments, the correlation loss function $\mathcal{L}_{CO}$ is provided with respective single bit values $l_{bit}$, $\theta_{bit}$, evaluated with these two input bits, and after that an absolute value of the respective value of the correlation loss function $\mathcal{L}_{CO}$ is obtained, wherein this procedure is repeated B many times, adding the individual absolute values of the bit-wise evaluated correlation loss function $\mathcal{L}_{CO}$ .

According to further exemplary embodiments, the correlation loss function $\mathcal{L}_{CO}$ can be characterized by the following equation:

$$\mathcal{L}_{CO}(l,\theta) = 1 - \frac{cov(l,\theta)}{\sigma_l \sigma_\theta + \epsilon} =$$

$$1 - \frac{\sum_{i=1}^{D}[(l_i - \bar{l})(\theta_i - \bar{\theta})]}{\sqrt{\sum_{i=1}^{D}(l_i - \bar{l})^2 \sum_{i=1}^{D}(\theta_i - \bar{\theta})^2} + \epsilon} \qquad \text{(equation 2)},$$

wherein cov() is a covariance, wherein $\sigma_l$ characterizes the standard deviation of the input vector I, wherein $\sigma_\theta$ characterizes the standard deviation of the input vector $\theta$, wherein D characterizes the batch size, wherein $\bar{l}$ characterizes the mean of the input I, wherein $\bar{\theta}$ characterizes the mean of the input $\theta$, wherein ε characterizes a characterizes a non-vanishing, e.g. small, parameter, wherein for example ε = $10^{-14}$. In some embodiments, the parameter ε may be used to avoid division by zero in some cases.

In some embodiments, the equation 2 may be used as the loss function LF, e.g. for block 102 of Fig. 1A, e.g. for a non-bit-wise correlation.

According to further exemplary embodiments, Fig. 4, the method further comprises weighting 110 the bit values $l_{bit}$ of the leakage value using weighting coefficients $c_i$, wherein weighted bit values $l_{bit\_w}$ are obtained, and performing 112 the (optionally bit-wise or non-bit-wise) correlation based on the weighted bit values $l_{bit\_w}$.

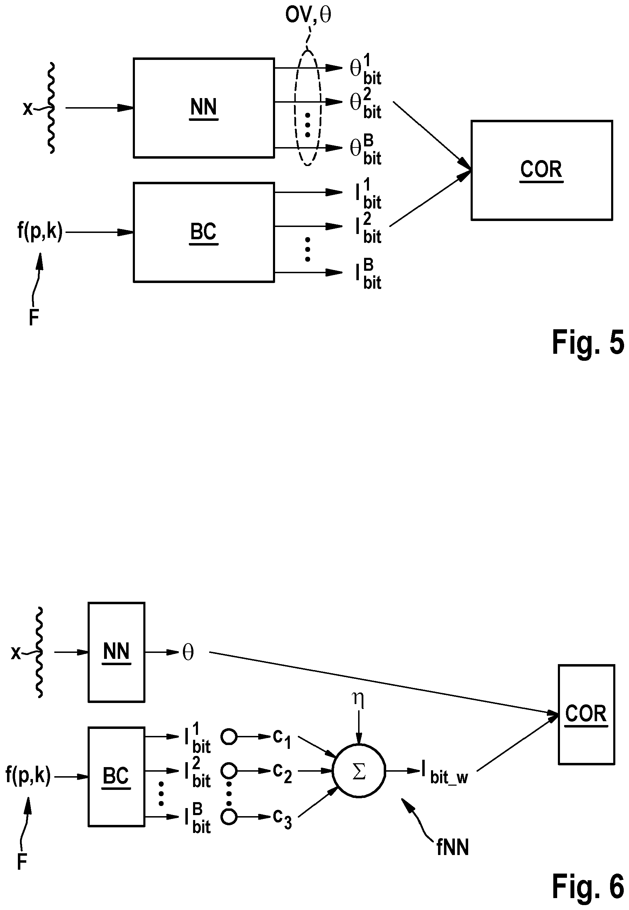

Note that in some embodiments, a bit-wise correlation may be performed based on the weighted bit values $l_{bit\_w}$. Also, note that in some (other) embodiments, a non-bit-wise correlation (see e.g. block COR of Fig. 6) may be performed based on the weighted bit values $l_{bit\_w}$.

According to further exemplary embodiments, Fig. 4, using 105 a further (e.g., artificial) neural network, e.g. a perceptron, is proposed, to approximate at least some of the weighting coefficients $c_i$. In some embodiments, the weighting coefficients $c_i$ comprise information on hardware aspects such as e.g. parasitic capacitance and/or (transmission) line/wire lengths, e.g. between different register cells of the physical system PS (Fig. 2), which may influence e.g. the electric power consumption.

According to further exemplary embodiments, the method further comprises modifying 106 a design and/or structure of the physical system PS based on at least one of the approximated weighting coefficients. In some embodiments, this way, e.g. asymmetry between different bit lines of the physical system PS may be reduced, wherein the physical system PS may be hardened against side channel attacks.

According to further exemplary embodiments, the method further comprises using 104 (Fig. 1A) the neural network NN, e.g. the trained NN DNN as may be obtained by the training 102 according to some embodiments, for determining information on at least one unknown and/or secret parameter (e.g., cryptographic key) k of the physical system PS and/or of a further physical system PS' (Fig. 7), which for example is structurally identical with the physical system PS at least to some extent. In some embodiments, the DNN NN trained according to the principle of the embodiments may e.g. be used for side channel attacks (SCA), e.g. based on correlation power analysis (CPA).

Fig. 5 schematically depicts a simplified flow-chart of a method according to further exemplary embodiments. In some embodiments, the configuration of Fig. 5 may e.g. be used for a correlation optimization using a bitwise loss calculation, e.g. for the training 102 of the DNN NN. Reference sign x denotes an exemplary power or electromagnetic (EM) trace, e.g. a time series of power consumption (or EM emission) measurements e.g. of the physical system PS (Fig. 2), which is provided to the DNN NN. Based on this input data x, the DNN NN provides an output value OV (e.g. a float or double number), individual bits of which are denoted with $\theta_{bit}^1, \theta_{bit}^2, \dots, \theta_{bit}^B$. Presently, the output value OV exemplarily comprises B many bits. In some embodiments, an output value of the function F, e.g. f(p, k), is determined, and provided in form of its bits $l_{bit}^1, l_{bit}^2, \dots, l_{bit}^B$, e.g. via the optional "bit conversion" block BC. In some embodiments, a bit-wise correlation, e.g. using equation (1) as explained above, is performed, see block COR of Fig. 5.

Fig. 6 schematically depicts a simplified flow-chart of a method according to further exemplary embodiments. In some embodiments, the configuration of Fig. 6 may e.g. be used for a correlation optimization using a loss calculation, e.g. for the training 102 of the DNN NN, similar to Fig. 5. Different from Fig. 5, the configuration of Fig. 6 comprises a further neural network fNN, e.g. of the perceptron type, wherein the further neural network fNN is configured to receive the bits $l_{bit}^1, l_{bit}^2, \dots, l_{bit}^B$ and to perform a weighting by means of the weighting coefficients $c_1, c_2, c_n$, also see e.g. block 110 of Fig. 4. Correspondingly, in some embodiments, the correlation COR of Fig. 6 is based on the weighted bits $l_{bit\_w}$. In some embodiments, the correlation COR of Fig. 6 may be performed in a non-bit-wise manner, e.g. as depicted by Fig. 6, e.g. based on the numbers $\theta$, $l_{bit\_w}$. In some embodiments, for this purpose, the correlation COR of Fig. 6 may e.g. be based on equation 2.

However, in some other embodiments, the correlation COR of Fig. 6 may be performed in a bit-wise manner, e.g. as depicted by Fig. 5. In some embodiments, for this purpose, the correlation COR of Fig. 6 may e.g. be based on equations 1 and 2.

In some embodiments, weights of both the DNN NN and of the further neural network fNN may be optimized during the training 102.

Fig. 7 schematically depicts a simplified block diagram according to further exemplary embodiments. Element e1 symbolizes a physical system PS which may also be denoted as "profiling device", as it may be used for a profiling phase according to some embodiments. In some embodiments, the profiling device PS may e.g. be used for Deep Learning (DL)-based profiled SCA, e.g. using correlation optimization (CO). As an example, in the profiling phase, one can take advantage of a profiling device PS on which the input p and secret key k (e.g., parameters of a cryptographic function evaluated by the device PS) can be fully controlled. In some embodiments, the profiling device PS is used to acquire a plurality, e.g. a large number, of profiling traces $x_i$ to build the training data set $D_{Train}$, which in turn is used to train (see for example block 102 of Fig. 1A) a DNN NN (Fig. 2), e.g. using the CO loss as may e.g. be characterized by equation 1.

Element e2 symbolizes measurement equipment which may e.g. be used to determine the profiling traces in some embodiments. Element e3 exemplarily symbolizes graphically a profiling trace forming part of the training data set $D_{Train}$. Element e4 symbolizes the training data set TDS that may be used for training 102, and element e5 symbolizes the neural network NN, e.g. during a training phase. Element e6 symbolizes an optional CPA that may be performed using the trained neural network NN in some embodiments.

In some embodiments, during an attack phase, a (new) set of attack traces $D_{Attack}$ may be obtained by operating an actual target device PS', e.g. a physical system which is structurally identical or similar to the profiling device PS, whereby the secret key k is e.g. fixed and unknown. Element e7 symbolizes the target device, and element e8 symbolizes measurement equipment which may e.g. be used to determine the attack traces in some embodiments, similar to element e2. Element e9 symbolizes an exemplary attack trace, and element e10 symbolizes the set of attack traces $D_{Attack}$.

The secret key k of the target device PS' may in some embodiments be determined or recovered by applying a CPA e6, wherein the attack traces $D_{Attack}$ are e.g. encoded by the DNN NN, e5 that was trained in the profiling phase.

In some embodiments, after a profiling phase, the DNN outputs (encoded traces + optimized leakage) may e.g. be used as an input for a template attack (TA) or to train a simple (linear) classifier such as logistic regression.

Further exemplary embodiments, Fig. 8, relate to an apparatus 200 configured to perform the method according to the embodiments.

The apparatus 200 comprises at least one calculating unit 202 and at least one memory unit 204 associated with (i.e., usably by) said at least one calculating unit 202 for at least temporarily storing a computer program PRG and/or data DAT, wherein said computer program PRG is e.g. configured to at least temporarily control an operation of said apparatus 200, e.g. the execution of a method according to the embodiments, cf. e.g. the exemplary flow chart of Fig. 1A.

In some embodiments, said at least one calculating unit 202 comprises at least one core 202a, 202b, 202c for executing said computer program PRG or at least parts thereof, e.g. for executing the method according to the embodiments or at least one or more steps thereof.

According to further preferred embodiments, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further preferred embodiments, the memory unit 204 comprises at least one of the following elements: a volatile memory 204a, particularly a random-access memory (RAM), a non-volatile memory 204b, particularly a Flash-EEPROM. Preferably, said computer program PRG is at least temporarily stored in said non-volatile memory 204b. Data DAT, which may e.g. be used for executing the method according to the embodiments, may at least temporarily be stored in said RAM 204a.

According to further preferred embodiments, an optional computer-readable storage medium SM comprising instructions, e.g. in the form of a computer program PRG, may be provided, wherein said computer program PRG, when executed by a computer, i.e. by the calculating unit 202, may cause the computer 202 to carry out the method according to the embodiments. As an example, said storage medium SM may comprise or represent a digital storage medium such as a semiconductor memory device (e.g., solid state drive, SSD) and/or a magnetic storage medium such as a disk or hard disk drive (HDD) and/or an optical storage medium such as a compact disc (CD) or DVD (digital versatile disc) or the like.

According to further preferred embodiments, the apparatus 200 may comprise an optional data interface 206, preferably for bidirectional data exchange with an external device (not shown). As an example, by means of said data interface 206, a data carrier signal DCS may be received, e.g. from said external device, for example via a wired or a wireless data transmission medium, e.g. over a (virtual) private computer network and/or a public computer network such as e.g. the Internet. According to further preferred embodiments, the data carrier signal DCS may represent or carry the computer program PRG according to the embodiments, or at least a part thereof.

In some embodiments, the apparatus 200 may receive profiling traces $x_i$ and/or attack traces and/or other data $v_i$ via the data carrier signal DCS.

Further exemplary embodiments relate to a computer program PRG comprising instructions which, when the program is executed by a computer 202, cause the computer 202 to carry out the method according to the embodiments.

Further exemplary embodiments, Fig. 9, relate to a use 300 of the method according to the embodiments and/or of the apparatus according to the embodiments and/or of the computer program according to the embodiments for at least one of: a) performing 301 a side channel analysis and/or attack on a physical system PS, PS', b) evaluating 302 a design of a physical system PS, PS', e.g. regarding its vulnerability to side channel attacks, c) determining 303 a correlation between a predicted output of a physical system and a physical parameter, e.g. power consumption, of the physical system, d) determining 304 secret data, e.g. a secret cryptographic key k.

The principle of the embodiments may e.g. be used for Power-based Side-Channel Attacks (SCAs), e.g. against security enabled devices. Power-based SCA exploit information leakages gained from a power consumption or electromagnetic emanations of a device to extract secret information such as cryptographic keys, even though the employed algorithms are mathematically sound.

SCAs can be divided in two categories: Non-profiled SCAs techniques aim to recover the secret key k by performing statistical calculations on power measurements of the device under attack regarding a hypothesis of the device's leakage. Profiled SCAs assume a stronger adversary who is in possession of a profiling device. It is an open copy of the attacked device which the adversary can manipulate to characterize the leakages very precisely in a first step. Once this has been done, the built model can be used to attack the actual target device in the key extraction phase.

In some embodiments, the DNN NN is trained to learn an encoding of the input data (e.g., power traces and/or electromagnetic parameters or the like) that maximizes a Pearson correlation with a hypothetical power consumption (aka leakage).

Some embodiments propose improvements of a CO scheme, wherein the first aspect is based on the optional bitwise DNN loss function calculation. A second aspect uses an additional (e.g., small) DNN fNN (Fig. 6), e.g. to learn an optimized power consumption model (that can be characterized based on the weighting coefficients $c_i$) to improve the correlation coefficient. In some embodiments, both aspects can be especially useful in the context of cryptographic hardware accelerators 202.

**Claims**

1. Method, for example computer-implemented method, for a neural network (NN), for example an artificial deep neural network, comprising: providing (100) a plurality of training data sets (TDS), each training data set comprising input data (ID) for the neural network (NN) and associated output data (OD), training (102) the neural network (NN) based on the plurality of training data sets (TDS) and a loss function (LF), wherein the loss function (LF) is based on a correlation of an output value (OV) provided by the neural network and a predetermined function (F) characterizing an operation of a physical system (PS), wherein the method further comprises weighting (103) bit values $l_{bit}$ of a leakage value (LV) associated with the predetermined function (F) using weighting coefficients ($c_i$), wherein weighted bit values $l_{bit\_w}$ are obtained, and evaluating (103a) the correlation based on the weighted bit values $l_{bit\_w}$.

2. Method according to claim 1, further comprising using (105) a further neural network (fNN), e.g. a perceptron, to approximate at least some of the weighting coefficients ($c_i$).

3. Method according to at least one of the preceding claims, wherein the loss function (LF) is based on a bit-wise correlation of the output value (OV) provided by the neural network and the predetermined function (F).

4. Method according to at least one of the preceding claims, wherein the providing (100) of the training data sets (TDS) comprises: determining (100a) a plurality of profiling traces ($x_i$), wherein each profiling trace ($x_i$) characterizes at least one physical parameter, for example an electrical power consumption, of the physical system (PS) during execution of the predetermined function (F), and determining (100b) a respective output value ($v_i$) of the predetermined function (F) for each of the plurality of profiling traces ($x_i$), and, optionally, using (100c) the profiling traces ($x_i$) and the output values ($v_i$) as said training data sets (TDS).

5. Method according to any of the preceding claims, wherein the neural network (NN) is a convolutional neural network.

6. Method according to any of the preceding claims, wherein a backpropagation technique is used for the training (102).

7. Method according to any of the preceding claims, wherein the loss function (LF) can be **characterized by** the following equation:

$$\mathcal{L}_{CO-BIT}\big(l_{bit}, \theta_{bit}\big) = \sum_{i=1}^{B} \big|\mathcal{L}_{CO}\big(l_{bit}, \theta_{bit}\big)^{(i)}\big|$$
,

wherein $l_{bit}$ characterizes a bit value of the leakage value (LV) associated with the predetermined function (F), wherein $\theta_{bit}$ characterizes a bit value of the output value (OV), wherein i is an index variable, wherein B is a total number of bits, e.g. of the function value, wherein $\mathcal{L}_{CO}$ characterizes a correlation loss function, and wherein |.| characterizes an absolute value.

8. Method according to any of the preceding claims, wherein the correlation loss function can be **characterized by** the following equation:

$$\mathcal{L}_{CO}(l, \theta) = 1 - \frac{cov(l, \theta)}{\sigma_l \sigma_\theta + \epsilon} =$$

$$1 - \frac{\sum_{i=1}^{D}[(l_i - \bar{l})(\theta_i - \bar{\theta})]}{\sqrt{\sum_{i=1}^{D}(l_i - \bar{l})^2 \sum_{i=1}^{D}(\theta_i - \bar{\theta})^2} + \epsilon}$$
,

wherein cov() is a covariance, wherein $\sigma_l$ characterizes the standard deviation of the input vector I, wherein $\sigma_\theta$ characterizes the standard deviation of the input vector θ, wherein D characterizes a batch size, wherein $\bar{l}$ characterizes the mean of the input I, wherein $\bar{\theta}$ characterizes the mean of the input θ, wherein ε characterizes a non-vanishing, e.g. small, parameter, wherein for example ε = $10^{-14}$.

9. Method according to at least one of the claims 2 to 8, further comprising modifying (106) a design and/or structure of the physical system (PS) based on at least one of the approximated weighting coefficients.

10. Method according to at least one of the preceding claims, further comprising: using (104) the neural network (NN) for determining information on at least one unknown and/or secret parameter of the physical system (PS) and/or of a further physical system (PS'), which for example is structurally identical with the physical system (PS) at least to some extent.

11. Apparatus (200) configured to perform the method according to at least one of the preceding claims.

12. A computer program (PRG) comprising instructions which, when the program (PRG) is executed by a computer (202), cause the computer (202) to carry out the method according to at least one of the claims 1 to 10.

13. A computer-readable storage medium (SM) comprising instructions (PRG') which, when executed by a computer (202), cause the computer (202) to carry out the method according to at least one of the claims 1 to 10.

14. A data carrier signal (DCS) carrying and/or characterizing the computer program (PRG) of claim 12.

15. Use (300) of the method according to at least one of the claims 1 to 10 and/or of the apparatus (200) according to claim 11 and/or of the computer program (PRG) according to claim 12 for at least one of: a) performing (301) a side channel analysis and/or attack on a physical system (PS, PS'), b) evaluating (302) a design of a physical system (PS, PS'), e.g. regarding its vulnerability to side channel attacks, c) determining (303) a correlation between a predicted output of a physical system (PS, PS') and a physical parameter, e.g. power consumption, of the physical system (PS, PS'), d) determining (304) secret data, e.g. a secret cryptographic key.

## Fig. 1A

100

↓ TDS

LF → 102

↓

103

↓

103a

↓

104

**Fig. 1A**

## Fig. 1B

100a

↓ $x_i$

100b

↓ $v_i$

100c

**Fig. 1B**

## Fig. 2

PS

p →
k → F → LV

PS'

ID → NN → OV

TDS

ID    OD

**Fig. 2**

NN-1

PE

OV

IL

HL1

HL2

OL

**Fig. 3**

$c_i$ → 110

$I_{bit\_w}$

112

105

106

**Fig. 4**

OV, θ

$\theta^1_{bit}$

$\theta^2_{bit}$

$\theta^B_{bit}$

x

NN

BC

f(p,k)

F

$I^1_{bit}$

$I^2_{bit}$

$I^B_{bit}$

COR

Fig. 5

x

NN

θ

f(p,k)

F

BC

$I^1_{bit}$

$I^2_{bit}$

$I^B_{bit}$

$c_1$

$c_2$

$c_3$

η

Σ

$I_{bit\_w}$

fNN

COR

Fig. 6

Fig. 7

Fig. 8

Fig. 9

Europäisches
Patentamt

European
Patent Office

Office européen
des brevets

## EUROPEAN SEARCH REPORT

Application Number

EP 20 20 2611

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBYNS PIETER ET AL: "Improving CEMA using Correlation Optimization", IACR TRANSACTIONS ON CRYPTOGRAPHIC HARDWARE AND EMBEDDED SYSTEMS, vol. 2019, no. 1, 9 November 2018 (2018-11-09), pages 1-24, XP055795418, ISSN: 2569-2925, DOI: 10.13154/tches.v2019.i1.1-24 * sec. 3.1, 3.2-3.2.3, 6 * | 1-15 | INV. G06N3/04 G06N3/08 G06F21/75 H04L9/00 |
| A | SHUGUO YANG ET AL: "Back Propagation Neural Network Based Leakage Characterization for Practical Security Analysis of Cryptographic Implementations", INFORMATION SECURITY AND CRYPTOLOGY - ICISC 2011, vol. 7259, 30 November 2011 (2011-11-30), pages 169-185, XP047011545, Springer-Verlag, Berlin Heidelberg ISBN: 978-3-642-31911-2 * Sec. 1, 2, 4.1 * | 1-15 | |
| A | LERMAN LIRAN ET AL: "Template attacks versus machine learning revisited and the curse of dimensionality in side-channel analysis: extended version", JOURNAL OF CRYPTOGRAPHIC ENGINEERING, vol. 8, no. 4, 22 April 2017 (2017-04-22), pages 301-313, XP036614076, Springer-Verlag, Berlin Heidelberg ISSN: 2190-8508, DOI: 10.1007/S13389-017-0162-9 [retrieved on 2017-04-22] * sec. 2.5 * | 1-15 | |

TECHNICAL FIELDS
SEARCHED (IPC)

G06N
H04L
G06F

-/--

The present search report has been drawn up for all claims

| Place of search | Date of completion of the search | Examiner |
|---|---|---|
| The Hague | 17 April 2021 | Millet, Guillaume |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 1 of 2

Europäisches
Patentamt

European
Patent Office

Office européen
des brevets

# EUROPEAN SEARCH REPORT

Application Number

EP 20 20 2611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HETTWER BENJAMIN ET AL.: "Applications of machine learning techniques in side-channel attacks: a survey", JOURNAL OF CRYPTOGRAPHIC ENGINEERING, vol. 10, no. 2, 11 April 2019 (2019-04-11), pages 135-162, XP037138655, Springer Berlin Heidelberg ISSN: 2190-8508, DOI: 10.1007/S13389-019-00212-8 [retrieved on 2019-04-11] * the whole document * | 1-15 | |

-----

TECHNICAL FIELDS
SEARCHED (IPC)

The present search report has been drawn up for all claims

| Place of search | Date of completion of the search | Examiner |
|---|---|---|
| The Hague | 17 April 2021 | Millet, Guillaume |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

page 2 of 2